# EUROPÄISCHE PATENTANMELDUNG

(11) **EP 4 738 696 A1**
(43) Veröffentlichungstag der Anmeldung: **06.05.2026**
(21) Anmeldenummer: 25212155.3
(22) Anmeldetag: 29.10.2025
(51) Int. Cl.: H02S 20/10, F24S 25/61

(54) **BEFESTIGUNGSVORRICHTUNG**

(30) Priorität: 30.10.2024 DE 102024131772
(71) Anmelder: SL Rack GmbH, 83527 Haag (DE)
(72) Erfinder: Schletter, Ludwig, 83527 Haag i. OB (DE)
(74) Vertreter: Lichtnecker, Markus Christoph

(57) **Zusammenfassung**

Die Erfindung betrifft eine Befestigungsvorrichtung zum Befestigen eines Solar- und/oder Photovoltaikmoduls, aufweisend wenigstens ein längliches Rammprofil mit mehreren, übereinander angeordneten Befestigungsöffnungen und vorzugsweise mit einem zumindest im Wesentlichen U-förmigen Querschnitt, und ein Kantprofil mit einem Rammprofilbefestigungsabschnitt und wenigstens einem Modulbefestigungsabschnitt, wobei der Rammprofilbefestigungsabschnitt und der Modulbefestigungsabschnitt in unterschiedenen Ebenen angeordnet sind, und wobei der Rammprofilbefestigungsabschnitt mehrere, vorzugsweise als Langlöcher ausgebildete, Rammprofilbefestigungsöffnungen aufweist und der Modulbefestigungsabschnitt eine Modulbefestigungsöffnung aufweist.

## Beschreibung

Die Erfindung betrifft eine Befestigungsvorrichtung zum Befestigen eines Solar- und/oder Photovoltaikmoduls, aufweisend wenigstens ein längliches Rammprofil, vorzugsweise mit einem zumindest im Wesentlichen U-förmigen Querschnitt.

Rammprofile sind grundsätzlich bekannt. Diese werden z.B. mit einem Schlagkopf senkrecht in einen Boden gerammt.

Horizontale Binder werden an den Rammprofilen befestigt. An den Bindern werden schließlich Solar- und/oder Photovoltaikmodule befestigt.

Nachteilig daran ist, dass die Solar- und/oder Photovoltaikmodule horizontal oder schräg ausgerichtet sind. Die Solar- und/oder Photovoltaikmodule beschatten somit den darunterliegenden Boden. Dies führt dazu, dass die Feilandfläche nicht oder nur sehr eingeschränkt landwirtschaftlich genutzt werden kann.

Es ist daher eine Aufgabe der Erfindung, eine Befestigungsvorrichtung, ein System sowie ein Verfahren zum Befestigen eines Solar- und/oder Photovoltaikmoduls zu schaffen, bei der/dem eine Freilandfläche, auf der das Solar- und/oder Photovoltaikmodul aufgestellt ist, auch landwirtschaftlich genutzt werden kann.

Die Lösung dieser Aufgabe erfolgt durch die Gegenstände/Verfahren der unabhängigen Ansprüche.

Erfindungsgemäß ist die Befestigungsvorrichtung zum Befestigen eines Solar- und/oder Photovoltaikmoduls ausgebildet und/oder kann hierzu verwendet werden.

Die Befestigungsvorrichtung weist wenigstens ein längliches Rammprofil mit mehreren, übereinander angeordneten Befestigungsöffnungen auf.

Das Rammprofil ist dazu ausgebildet, vorzugsweise vertikal, in einen Boden gerammt zu werden. Beispielsweise kann mindestens 1/4, 1/3 oder 1/2 des Rammprofils in den Boden gerammt werden. Der Anteil des Rammprofils, der in den Boden gerammt wird, kann von der Beschaffenheit des Bodens und/oder der Belastung des Rammprofils abhängen.

Beispielsweise kann das Rammprofil eine Länge zwischen 2 m und 5 m, z.B. 4,2 m, aufweisen. Ein 2,6 m langer Abschnitt des Rammprofils kann beispielsweise oberirdisch herausragen, während ein 1,6 m langer Abschnitt des Rammprofils in den Boden versenkt sein kann. Der Abstand des Solar- und/oder Photovoltaikmoduls zum Boden kann dem jeweiligen landwirtschaftlichen Nutzungskonzept angepasst werden.

Die Breite des Rammprofils kann zum Beispiel zwischen 10 cm und 20 cm, z.B. 14 cm, betragen.

Vorzugsweise weist das Rammprofil einen zumindest im Wesentlichen U-förmigen Querschnitt auf.

Ein U-förmiger Querschnitt sorgt einerseits für einen guten Halt im Boden. Andererseits bietet diese Kontur geeignete Befestigungsabschnitte. Beispielsweise können die Befestigungsöffnungen an einem oder an beiden Schenkeln der Kontur vorgesehen sein.

Vorzugsweise sind mindestens oder genau zwei, drei, vier oder fünf BefestigungsÖffnungen gruppenweise angeordnet. Beispielsweise können zwei oder mehr Gruppen mit jeweils mehreren Befestigungsöffnungen übereinander am Rammprofil vorgesehen sein.

Die Befestigungsvorrichtung weist ein Kantprofil, z.B. Winkelprofil, mit einem Rammprofilbefestigungsabschnitt und wenigstens einem Modulbefestigungsabschnitt auf.

Vorzugsweise ist das Kantprofil kürzer als das Rammprofil. Bevorzugt erstreckt sich das Kantprofil lediglich über einen vergleichsweise kleinen Abschnitt, z.B. maximal 1/5, 1/6, 1/7, 1/8, 1/9, 1/10, 1/15 oder 1/20 der Länge des Rammprofils.

Das Kantprofil kann an seinem Rammprofilbefestigungsabschnitt am Rammprofil befestigt, z.B. verschraubt, werden.

Vorzugsweise kann der Rammprofilbefestigungsabschnitt flächig und/oder plattenförmig ausgebildet sein.

Am Modulbefestigungsabschnitt des Kantprofils kann hingegen das Solar- und/oder Photovoltaikmodul befestigt, z.B. verschraubt, werden.

Vorzugsweise kann der Modulbefestigungsabschnitt flächig und/oder plattenförmig ausgebildet sein.

Der Rammprofilbefestigungsabschnitt und der Modulbefestigungsabschnitt sind in unterschiedenen Ebenen angeordnet. Vorzugsweise ist das Kantprofil entsprechend abgekantet.

Der Rammprofilbefestigungsabschnitt weist mehrere Rammprofilbefestigungsöffnungen auf.

Zum Befestigen kann wenigstens eine Rammprofilbefestigungsöffnung des Kantprofils mit einer Befestigungsöffnung des Rammprofils in Deckung gebracht werden. Vorzugsweise werden mehrere Rammprofilbefestigungsöffnungen mit mehreren Befestigungsöffnungen in Deckung gebracht. Durch die Öffnungen kann z.B. eine Schraube und/oder ein Bolzen geführt werden, um die Bauteile, z.B. mittels einer Mutter, aneinander zu fixieren.

Die Rammprofilbefestigungsöffnungen sind vorzugsweise als, z.B. horizontale, Langlöcher ausgebildet. Dadurch ist ein gewisses Spiel für die Montage vorhanden. Unebenheiten im Gelände können auf diese Weise kompensiert werden.

Die Langlöcher sind vorzugsweise parallel zueinander orientiert.

Die Länge der Langlöcher kann zum Beispiel zwischen 1 cm und 5 cm, z.B. 2,5 cm, betragen.

Der Modulbefestigungsabschnitt weist eine Modulbefestigungsöffnung auf.

Beispielsweise kann zum Befestigen die Modulbefestigungsöffnung des Kantprofils mit einer Modulöffnung des Solar- und/oder Photovoltaikmoduls in Deckung gebracht werden. Durch die Öffnungen kann z.B. eine Schraube und/oder ein Bolzen geführt werden, um die Bauteile, z.B. mittels einer Mutter, aneinander zu fixieren.

Im montierten Zustand sind die Solar- und/oder Photovoltaikmodule vorzugsweise vertikal orientiert.

Die Solar- und/oder Photovoltaikmodule beschatten daher den darunterliegenden Boden nicht bzw. nur geringfügig. Zudem können Landmaschinen zwischen den aufgerichteten Solar- und/oder Photovoltaikmodulen bewegt werden. Dies führt dazu, dass die Feilandfläche auch landwirtschaftlich genutzt werden kann.

Es ist somit eine Doppelnutzung der Freilandfläche möglich.

Durch die kompakte Bauweise ist der Flächenbedarf zudem gering.

Weiterbildungen der Erfindung sind auch den abhängigen Ansprüchen, der Beschreibung sowie den beigefügten Zeichnungen zu entnehmen.

Gemäß einer Ausführungsform weist der Rammprofilbefestigungsabschnitt mindestens oder genau zwei, drei, vier oder fünf Rammprofilbefestigungsöffnungen auf.

Zum Befestigen müssen nicht mehrere und/oder sämtliche Rammprofilbefestigungsöffnungen mit sämtlichen Befestigungsöffnungen des Rammprofils in Deckung gebracht werden, auch wenn dies hinsichtlich der Stabilität vorteilhaft ist. Es reicht beispielsweise, wenn die Bauteile an jeweils einer Öffnung aneinander befestigt, vorzugsweise verschraubt, werden.

Unebenheiten des Geländes können durch diese variable Anpassbarkeit kompensiert werden. Die Öffnungen können je nach Bedarf ausgewählt werden. Beispielsweise kann eine Befestigung zwischen der untersten Rammprofilbefestigungsöffnung und der obersten Befestigungsöffnung erfolgen.

Nach einer weiteren Ausführungsform weist der Modulbefestigungsabschnitt genau eine Modulbefestigungsöffnung auf.

Dadurch, dass der Modulbefestigungsabschnitt lediglich eine Modulbefestigungsöffnung aufweist, kann eine schnelle und einfache Montage erfolgen.

Mehrere Modulbefestigungsöffnungen sind zwar möglich, jedoch nicht erforderlich, da die Anpassbarkeit an das Gelände über die Rammprofilbefestigungsöffnungen und/oder die Befestigungsöffnungen des Rammprofils bereitgestellt wird.

Gemäß einer weiteren Ausführungsform sind der Rammprofilbefestigungsabschnitt und der Modulbefestigungsabschnitt parallel zueinander orientiert.

Dadurch können sich die Abschnitte jeweils optimal an das Rammprofil bzw. das Solar- und/oder Photovoltaikmodul anpassen.

Ferner kann das Solar- und/oder Photovoltaikmodul vertikal befestigt werden.

Nach einer weiteren Ausführungsform ist zwischen dem Rammprofilbefestigungsabschnitt und dem Modulbefestigungsabschnitt ein, vorzugsweise flächiger und/oder plattenförmiger, Zwischenabschnitt vorgesehen.

Der Zwischenabschnitt verbindet vorzugsweise den Rammprofilbefestigungsabschnitt mit dem Modulbefestigungsabschnitt.

Bevorzugt grenzt der Zwischenabschnitt unmittelbar an den Rammprofilbefestigungsabschnitt sowie den Modulbefestigungsabschnitt an.

Der Rammprofilbefestigungsabschnitt, der Zwischenabschnitt und der Modulbefestigungsabschnitt sind zum Beispiel einstückig, also als gemeinsames Bauteil, ausgebildet.

Der Zwischenabschnitt ist vorzugsweise rechtwinklig zum Rammprofilbefestigungsabschnitt und/oder zum Modulbefestigungsabschnitt orientiert. Insgesamt kann das Kantprofil beispielsweise S-förmig ausgebildet sein.

Gemäß einer weiteren Ausführungsform sind zwei, in derselben Ebene angeordnete Modulbefestigungsabschnitte vorgesehen, welche an unterschiedlichen Seiten des Rammprofilbefestigungsabschnitts angeordnet sind.

Es können somit z.B. zwei Solar- und/oder Photovoltaikmodule an einem Kantprofil befestigt werden. Die Solar- und/oder Photovoltaikmodule sind hierbei an unterschiedlichen Seiten des Kantprofils angeordnet.

Die Modulbefestigungsabschnitte sind vorzugsweise jeweils über Zwischenabschnitte mit dem Rammprofilbefestigungsabschnitt verbunden.

Der Rammprofilbefestigungsabschnitt, die Zwischenabschnitte und die Modulbefestigungsabschnitte sind zum Beispiel einstückig, also als gemeinsames Bauteil, ausgebildet.

Das Kantprofil ist vorzugsweise achsensymmetrisch. Bevorzugt sind die Zwischenabschnitte und der Rammprofilbefestigungsabschnitt insgesamt U-förmig ausgebildet.

Die Erfindung betrifft auch ein System mit wenigstens einer erfindungsgemäßen Befestigungsvorrichtung und zumindest einem Solar- und/oder Photovoltaikmodul.

Vorzugsweise ist das Solar- oder Photovoltaikmodul als bifaziales Solar- oder Photovoltaikmodul ausgebildet.

Das Solar- oder Photovoltaikmodul kann daher auf beiden Seiten Sonnenlicht aufsammeln.

Alternativ können beispielsweise gewöhnliche Solar- oder Photovoltaikmodule eingesetzt werden. Der Ertrag ist in diesem Fall jedoch geringer, da lediglich auf einer Seite Sonnenlicht aufgesammelt werden kann.

Es besteht ferner die Möglichkeit, zwei Solar- oder Photovoltaikmodule Rücken an Rücken zu montieren. Dabei können an gegenüberliegenden Seiten des Rammprofils Kantprofile befestigt werden.

Das Solar- oder Photovoltaikmodul wird an wenigstens einer Befestigungsvorrichtung befestigt, vorzugsweise verschraubt.

Gemäß einer Ausführungsform weist das Solar- und/oder Photovoltaikmodul wenigstens eine Modulöffnung zur Befestigung am Modulbefestigungsabschnitt auf.

Beispielsweise kann die Modulöffnung mit der Modulbefestigungsöffnung in Deckung gebracht werden. Durch die Öffnungen kann z.B. eine Schraube und/oder ein Bolzen geführt werden, um die Bauteile, z.B. mittels einer Mutter, aneinander zu fixieren.

Vorzugsweise weist das Solar- und/oder Photovoltaikmodul wenigstens oder genau zwei, drei, vier, fünf, sechs, sieben, acht, neun, zehn oder mehr Modulöffnungen auf.

Beispielsweise können an gegenüberliegenden Randbereichen des Solar- und/oder Photovoltaikmoduls Modulöffnungen vorgesehen sein. So kann die Solar- und/oder Photovoltaikmodul an beiden Seiten befestigt werden, wodurch sich die Stabilität erhöht.

Vorzugsweise sind an gegenüberliegenden Randbereichen jeweils zwei Modulöffnungen vorgesehen, welche im montierten Zustand in unterschiedlichen Höhen angeordnet sind. Insgesamt kann ein Solar- und/oder Photovoltaikmodul beispielsweise an vier Modulöffnungen (jeweils zwei an gegenüberliegenden Randbereichen) beidseitig an jeweils einer Befestigungsvorrichtung befestigt werden.

Nach einer weiteren Ausführungsform sind mehrere Befestigungsvorrichtungen und/oder mehrere Solar- und/oder Photovoltaikmodule vorgesehen.

Beispielsweise kann jedes Solar- oder Photovoltaikmodul an zwei Befestigungsvorrichtungen befestigt, vorzugsweise verschraubt, werden. Das Solar- oder Photovoltaikmodul wird somit sicher zwischen den Rammprofilen gehalten.

Zur Erhöhung der Stabilität können benachbarte Rammprofile beispielsweise über eine oder mehrere Querstreben miteinander verbunden sein.

Der Abstand zwischen zwei benachbarten Rammprofilen kann zum Beispiel zwischen 1 m und 2 m, z.B. 1,27 m, betragen.

Bevorzugt ist eine Vielzahl an Befestigungsvorrichtungen und dazwischen angeordneten Solar- oder Photovoltaikmodulen vorgesehen. Diese können jeweils in Reihen, vergleichbar mit einem Zaun und/oder einer Wand, angeordnet sein. Mehrere Reihen können bevorzugt parallel zueinander angeordnet sein. So kann eine Freilandfläche mit einer Vielzahl an Reihen versehen werden.

Die Reihen sind vorzugsweise derart voneinander beabstandet, dass zwischen den Reihen Landwirtschaft betrieben werden kann.

Beispielsweise kann die Reihenausrichtung, der Abstand und/oder die Länge der Reihen an das landwirtschaftliche Nutzungskonzept angepasst sein, damit möglichst keine Einschränkungen in der Bearbeitung der Fläche durch die landwirtschaftlichen Maschinen entstehen.

Schließlich betrifft die Erfindung ein Verfahren zum Befestigen eines Solar- und/oder Photovoltaikmoduls mit einer erfindungsgemäßen Befestigungsvorrichtung und/oder mit einem erfindungsgemäßen System.

Dabei wird das längliche Rammprofil, beispielsweise senkrecht, in einen Boden gerammt. Dies kann z.B. mit Hilfe eines Schlagkopfes erfolgen.

Das Solar- und/oder Photovoltaikmodul wird am Modulbefestigungsabschnitt des Kantprofils befestigt, vorzugsweise verschraubt.

Dazu kann die Modulöffnung mit der Modulbefestigungsöffnung in Deckung gebracht werden. Durch die Öffnungen kann z.B. eine Schraube und/oder ein Bolzen geführt werden, um die Bauteile, z.B. mittels einer Mutter, aneinander zu fixieren, z.B. zu verschrauben.

Das Kantprofil wird am, vorzugsweise bereits eingerammten, Rammprofil befestigt, vorzugsweise verschraubt.

Dazu kann wenigstens eine Rammprofilbefestigungsöffnung des Kantprofils mit einer Befestigungsöffnung des Rammprofils in Deckung gebracht werden. Vorzugsweise werden mehrere Rammprofilbefestigungsöffnungen mit mehreren Befestigungsöffnungen in Deckung gebracht. Durch die Öffnungen kann z.B. eine Schraube und/oder ein Bolzen geführt werden, um die Bauteile, z.B. mittels einer Mutter, aneinander zu fixieren, z.B. zu verschrauben.

Welche und/oder wie viele Öffnungen zur Montage verwendet werden, hängt beispielsweise vom Gelände ab. Durch die Vielzahl an Öffnungen ist für die Anpassung ein gewisses Spiel vorhanden.

Beispielsweise wird zunächst das Kantprofil am Solar- und/oder Photovoltaikmodul befestigt, ehe eine Montage des Kantprofils am Rammprofil erfolgt. Grundsätzlich kann die Montage ebenso in umgekehrter Reihenfolge erfolgen.

Alle hier beschriebenen Ausführungsformen und Bauteile der Vorrichtungen sind vorzugsweise dazu ausgebildet, nach dem hier beschriebenen Verfahren montiert zu werden.

Ferner können alle hier beschriebenen Ausführungsformen der Vorrichtungen sowie alle hier beschriebenen Ausführungsformen des Verfahrens jeweils miteinander kombiniert werden, vorzugsweise auch losgelöst von der konkreten Ausgestaltung, in deren Zusammenhang sie erwähnt werden.

Generell wird bemerkt, dass Begriffe wie "ein" bzw. "eine" nicht zwingend "genau ein" bzw. "genau eine" bedeuten, wobei dies ebenso möglich ist. Die Begriffe "ein" bzw. "eine" können daher als "mindestens oder genau ein" bzw. "mindestens oder genau eine" verstanden werden. Die Verwendung des Singulars schließt vorzugsweise das Vorliegen der Bauteile im Plural mit ein und umgekehrt.

Es wird festgehalten, dass "vorzugsweise" und "bevorzugt" als "preferably" auf Englische übersetzt werden können. Ein durch "vorzugsweise" oder "bevorzugt" eingeleitetes Merkmal ist rein fakultativ, kann weggelassen werden und stellt keine Einschränkung, beispielsweise der Ansprüche, dar.

Die Erfindung wird im Folgenden beispielhaft unter Bezugnahme auf die Zeichnungen beschrieben. Es zeigen:
- Fig. 1: eine Perspektivansicht einer Ausführungsform eines Rammprofils einer erfindungsgemäßen Befestigungsvorrichtung,
- Fig. 2: eine Draufsicht einer Ausführungsform eines erfindungsgemäßen Systems,
- Fig. 3: eine Perspektivansicht einer Ausführungsform eines erfindungsgemäßen Systems,
- Fig. 4: eine Vorderansicht einer Ausführungsform eines erfindungsgemäßen Systems,
- Fig. 5: eine Vergrößerung des Bereichs A gemäß Fig. 2,
- Fig. 6: eine Vergrößerung des Bereichs A' gemäß Fig. 3,
- Fig. 7: eine Vergrößerung des Bereichs B gemäß Fig. 2,
- Fig. 8: eine Vergrößerung des Bereichs B' gemäß Fig. 3,
- Fig. 9: eine Vergrößerung des Bereichs C gemäß Fig. 2,
- Fig. 10: eine Vergrößerung des Bereichs C' gemäß Fig. 3,
- Fig. 11: eine Vergrößerung des Bereichs D gemäß Fig. 4, und
- Fig. 12: eine Draufsicht einer weiteren Ausführungsform eines erfindungsgemäßen Systems.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden.

Die Anzahl, Form und/oder Position der Befestigungsöffnungen, Rammprofilbefestigungsöffnungen, Modulbefestigungsöffnungen und/oder Modulöffnungen ist grundsätzlich beliebig. Ferner kann die Anzahl, Form und/oder Position der Rammprofile, Kantprofile sowie Solar- und/oder Photovoltaikmodule variieren.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

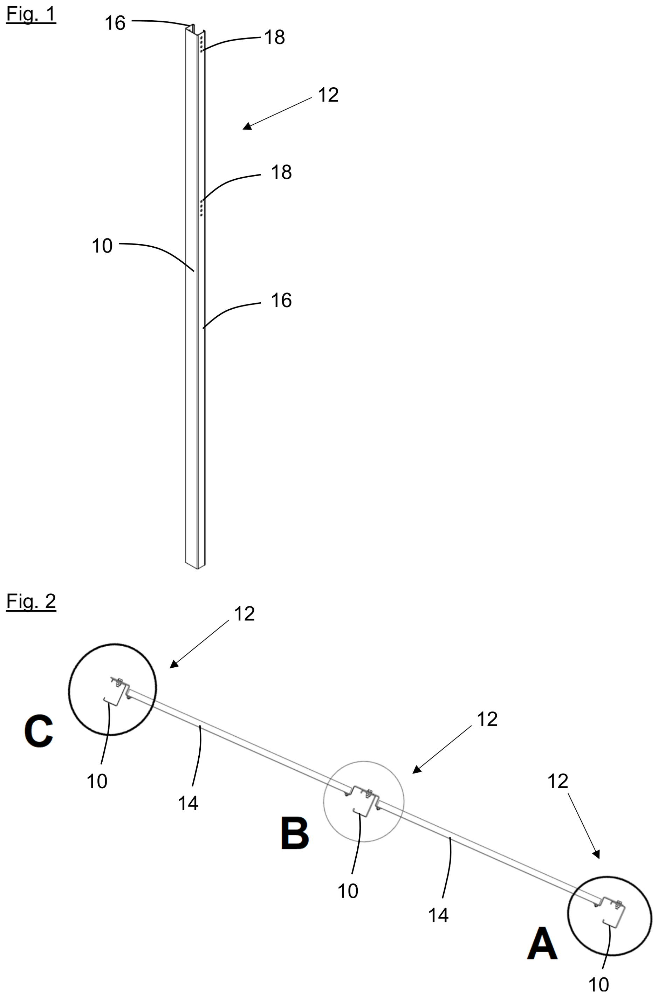

Fig. 1 zeigt ein längliches Rammprofil 10 einer Befestigungsvorrichtung 12 zum Befestigen eines Solar- und/oder Photovoltaikmoduls 14.

Das Rammprofil 10 weist einen U-förmigen Querschnitt auf, wobei die Enden der Schenkel 16 vorzugsweise nach Innen gebogen sein können.

An den gegenüberliegenden Schenkeln 16 sind jeweils zwei Gruppen mit jeweils vier übereinander angeordneten Befestigungsöffnungen 18 vorgesehen.

Das Rammprofil 10 wird bei der Montage teilweise in einen Boden 20 gerammt.

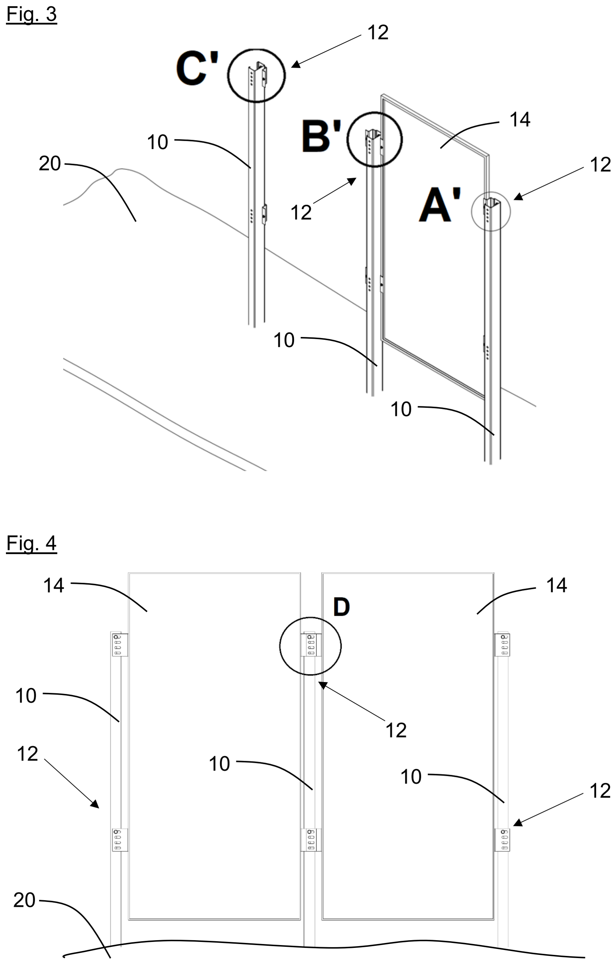

Wie in Fig. 2 und Fig. 3 dargestellt ist, können mehrere Rammprofile 10 in einer Reihe nebeneinander in den Boden 20 gerammt werden. Die Reihe kann grundsätzlich beliebig lang sein. Auch können mehrere Reihen, vorzugsweise parallel zueinander, voneinander beabstandet angeordnet werden.

Der Abstand kann dabei derart gewählt werden, dass Nutzpflanzen zwischen den Reihen angebaut werden können. Ferner können landwirtschaftliche Nutzfahrzeuge zwischen den Reihen bewegt werden.

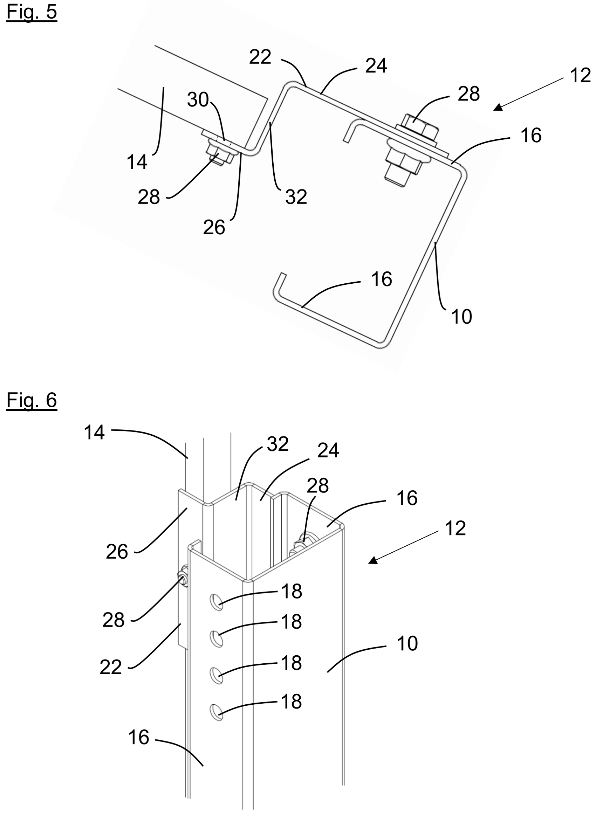

Detailansichten der Bereiche A und A', B und B' sowie C und C' in denen jeweils eine Befestigungsvorrichtung 12 dargestellt ist, sind in den Fig. 5 und 6, Fig. 7 und 8 sowie Fig. 9 und 10 gezeigt.

Zu besseren Sichtbarkeit wurde in Fig. 3 lediglich ein Solar- und/oder Photovoltaikmodul 14 dargestellt.

Wie auch in Fig. 4 zu sehen ist, können an den Rammprofilen 10 jeweils mehrere, z.B. zwei, Befestigungsbereiche vorgesehen sein, um die Solar- und/oder Photovoltaikmodule 14 sicher zu befestigen.

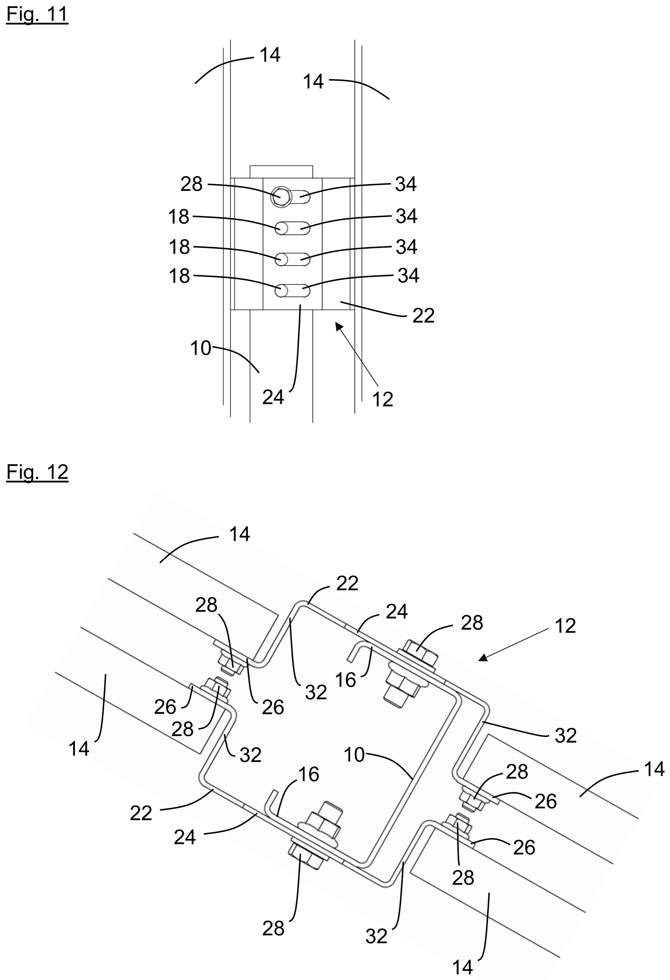

Eine Detailansicht des Bereichs D, in dem eine Befestigungsvorrichtung 12 dargestellt ist, ist in Fig. 11 gezeigt.

Fig. 5 zeigt eine Vergrößerung des Bereichs A gemäß Fig. 2.

Ein Kantprofil 22 weist einen Rammprofilbefestigungsabschnitt 24 und einen Modulbefestigungsabschnitt 26 auf.

Das Kantprofil 22 kann am Rammprofilbefestigungsabschnitt 24 über eine Schraubverbindung 28 (z.B. Schraube mit Mutter und optionaler/n Unterlegscheibe/n) mit dem Rammprofil 10 verschraubt werden bzw. verschraubt sein.

Ferner kann das Kantprofil 22 am Modulbefestigungsabschnitt 26 mit dem Solar- und/oder Photovoltaikmodul 14 über eine Schraubverbindung 28 verschraubt werden bzw. verschraubt sein.

Hierzu weist der Modulbefestigungsabschnitt 26 eine gepunktet dargestellte Modulbefestigungsöffnung 30 auf.

Das Solar- und/oder Photovoltaikmodul 14 weist eine nicht dargestellte Modulöffnung auf.

Der Rammprofilbefestigungsabschnitt 24 und der Modulbefestigungsabschnitt 26 sind parallel zueinander orientiert, jedoch in unterschiedlichen Ebenen angeordnet.

Die Anordnung in unterschiedlichen Ebenen ist im Hinblick auf die Statik und/oder Platzeinsparung vorteilhaft. So kann das Solar- und/oder Photovoltaikmodul 14 in einem Innenbereich montiert werden und steht seitlich nicht über das Rammprofil 10 vor.

Zwischen dem Rammprofilbefestigungsabschnitt 24 und dem Modulbefestigungsabschnitt 26 ist ein Zwischenabschnitt 32 vorgesehen, welcher rechtwinklig zum Rammprofilbefestigungsabschnitt 24 und zum Modulbefestigungsabschnitt 26 orientiert ist.

Wie in Fig. 6 (Vergrößerung des Bereichs A' gemäß Fig. 3) zu sehen ist, sind der Rammprofilbefestigungsabschnitt 24, der Modulbefestigungsabschnitt 26 und der Zwischenabschnitt 32 flächig ausgebildet.

Das Kantprofil 22 kann an einer oder mehreren Befestigungsöffnung/en 18 des Rammprofils 10 verschraubt werden bzw. verschraubt sein.

Welche/s Befestigungsöffnung/en 18 verwendet wird/werden, hängt von der Beschaffenheit des Bodens 20 ab und kann zwischen den Rammprofilen 10 variieren.

Das in den Fig. 5 und 6 gezeigte Kantprofil 22 ist beispielsweise für einen Anfang oder ein Ende einer Reihe geeignet. Dort ist z.B. lediglich an einer Seite ein Solar- und/oder Photovoltaikmodul 14 am Rammprofil 10 angeordnet.

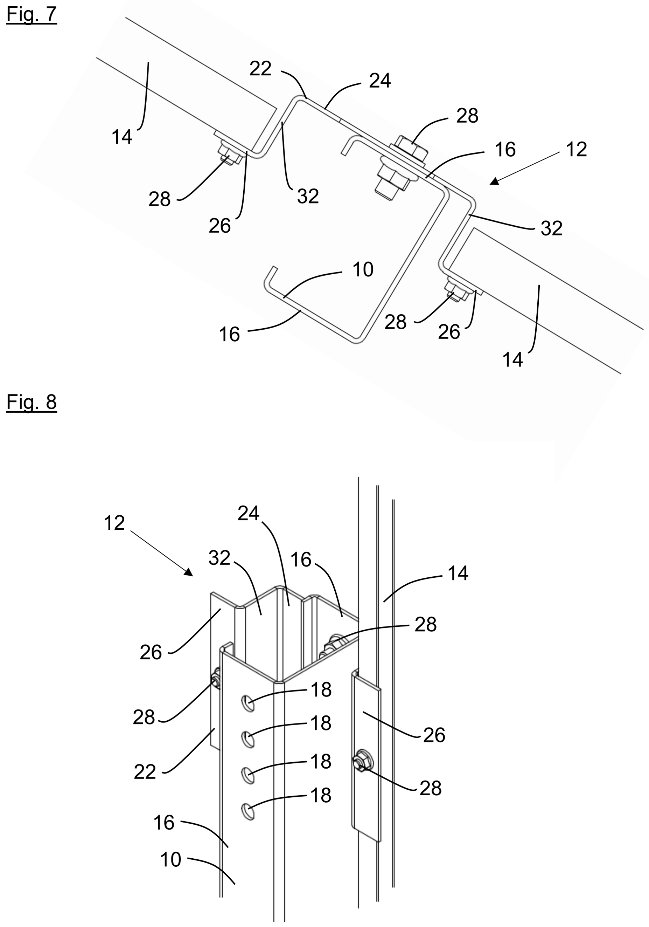

Fig. 7 zeigt eine Vergrößerung des Bereichs B gemäß Fig. 2.

Das Kantprofil 22 weist zwei, in derselben Ebene angeordnete Modulbefestigungsabschnitte 26 auf, welche an unterschiedlichen Seiten des Rammprofilbefestigungsabschnitts 24 angeordnet sind.

Wie in Fig. 8 (Vergrößerung des Bereichs B' gemäß Fig. 3) zu sehen ist, sind der Rammprofilbefestigungsabschnitt 24, die Modulbefestigungsabschnitte 26 und die Zwischenabschnitte 32 flächig ausgebildet.

Das in den Fig. 7 und 8 gezeigte Kantprofil 22 ist beispielsweise für einen Zwischenbereich einer Reihe geeignet. Dort wird an beiden Seiten des Rammprofils 10 jeweils ein Solar- und/oder Photovoltaikmodul 14 angeordnet.

Das Kantprofil 22 ist hierbei achsensymmetrisch. Die Zwischenabschnitte 32 und der Rammprofilbefestigungsabschnitt 24 sind insgesamt U-förmig ausgebildet.

Der Rammprofilbefestigungsabschnitt 24 liegt zumindest abschnittsweise an einem Schenkel des Kantprofils 22 an.

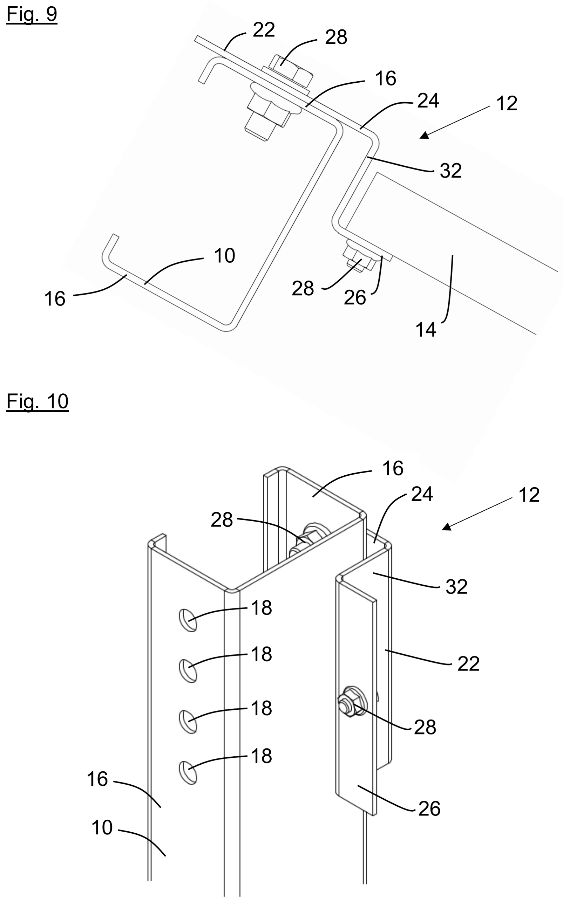

Fig. 9 zeigt eine Vergrößerung des Bereichs C gemäß Fig. 2, während in Fig. 10 eine Vergrößerung des Bereichs C' gemäß Fig. 3 dargestellt ist.

Das in den Fig. 9 und 10 gezeigte Kantprofil 22 ist beispielsweise für einen Anfang oder ein Ende einer Reihe geeignet. Dort ist z.B. lediglich an einer Seite ein Solar- und/oder Photovoltaikmodul 14 am Rammprofil 10 angeordnet.

Im Gegensatz zu Fig. 5 und 6 ist der Modulbefestigungsabschnitt 26 quasi Rückseitig zum Rammprofil 10 angeordnet.

Vorzugsweise kann das Kantprofil 22 je nach Bedarf in beliebiger Orientierung am Rammprofil 10 befestigt werden. Die Anzahl an unterschiedlichen Bauteilen kann auf diese Weise reduziert werden, wodurch Kosten eingespart werden können.

In Fig. 11 ist eine Vergrößerung des Bereichs D gemäß Fig. 4 gezeigt.

Der Rammprofilbefestigungsabschnitt 24 weist mehrere, als Langlöcher ausgebildete Rammprofilbefestigungsöffnungen 34 auf.

Zum Befestigen kann wenigstens eine Rammprofilbefestigungsöffnung 34 des Kantprofils 22 mit einer Befestigungsöffnung 18 des Rammprofils 10 in Deckung gebracht werden. Durch die Öffnungen 34, 18 kann z.B. eine Schraubverbindung 28 geführt werden, um die Bauteile aneinander zu fixieren.

Dadurch, dass die Rammprofilbefestigungsöffnungen 34 als Langlöcher ausgebildet sind, ein gewisses Spiel für die Montage vorhanden. Ein unebener Boden 20 kann auf diese Weise ausgeglichen werden.

Schließlich zeigt Fig. 12 eine Variante, bei der jeweils paarweise Kantprofile 22 am Rammprofil 10 befestigt sind. Somit können beidseitig Solar- und/oder Photovoltaikmodule 14 am Rammprofil 10 montiert werden.

Dies kann z.B. dann vorteilhaft sein, wenn keine bifazialen Solar- oder Photovoltaikmodule 14 eingesetzt werden.

### Bezugszeichenliste

- 10: Rammprofil
- 12: Befestigungsvorrichtung
- 14: Solar- und/oder Photovoltaikmodul
- 16: Schenkel
- 18: Befestigungsöffnung
- 20: Boden
- 22: Kantprofil
- 24: Rammprofilbefestigungsabschnitt
- 26: Modulbefestigungsabschnitt
- 28: Schraubverbindung
- 30: Modulbefestigungsöffnung
- 32: Zwischenabschnitt
- 34: Langloch, Rammprofilbefestigungsöffnung

## Patentansprüche

1. Befestigungsvorrichtung (12) zum Befestigen eines Solar- und/oder Photovoltaikmoduls (14), aufweisend
wenigstens ein längliches Rammprofil (10) mit mehreren, übereinander angeordneten Befestigungsöffnungen (18) und vorzugsweise mit einem zumindest im Wesentlichen U-förmigen Querschnitt, und
ein Kantprofil (22) mit einem Rammprofilbefestigungsabschnitt (24) und wenigstens einem Modulbefestigungsabschnitt (26), wobei
der Rammprofilbefestigungsabschnitt (24) und der Modulbefestigungsabschnitt (26) in unterschiedenen Ebenen angeordnet sind, und wobei
der Rammprofilbefestigungsabschnitt (24) mehrere, vorzugsweise als Langlöcher ausgebildete, Rammprofilbefestigungsöffnungen (34) aufweist und der Modulbefestigungsabschnitt (26) eine Modulbefestigungsöffnung (30) aufweist.

2. Befestigungsvorrichtung (12) nach Anspruch 1,
**dadurch gekennzeichnet,**
**dass** der Rammprofilbefestigungsabschnitt (24) mindestens oder genau zwei, drei, vier oder fünf Rammprofilbefestigungsöffnungen (34) aufweist.

3. Befestigungsvorrichtung (12) nach Anspruch 1 oder 2,
**dadurch gekennzeichnet,**
**dass** der Modulbefestigungsabschnitt (26) genau eine ModulbefestigungsÖffnung (30) aufweist.

4. Befestigungsvorrichtung (12) nach einem der vorhergehenden Ansprüche,
**dadurch gekennzeichnet,**
**dass** der Rammprofilbefestigungsabschnitt (24) und der Modulbefestigungsabschnitt (26) parallel zueinander orientiert sind.

5. Befestigungsvorrichtung (12) nach einem der vorhergehenden Ansprüche,
**dadurch gekennzeichnet,**
**dass** zwischen dem Rammprofilbefestigungsabschnitt (24) und dem Modulbefestigungsabschnitt (26) ein, vorzugsweise flächiger und/oder plattenförmiger, Zwischenabschnitt (32) vorgesehen ist.

6. Befestigungsvorrichtung (12) nach einem der vorhergehenden Ansprüche,
**dadurch gekennzeichnet,**
**dass** zwei, in derselben Ebene angeordnete Modulbefestigungsabschnitte (26) vorgesehen sind, welche an unterschiedlichen Seiten des Rammprofilbefestigungsabschnitts (24) angeordnet sind.

7. System mit wenigstens einer Befestigungsvorrichtung (12) nach einem der vorherigen Ansprüche und zumindest einem Solar- und/oder Photovoltaikmodul (14).

8. System nach Anspruch 7,
**dadurch gekennzeichnet,**
**dass** das Solar- und/oder Photovoltaikmodul (14) wenigstens eine Modulöffnung zur Befestigung am Modulbefestigungsabschnitt (26) aufweist.

9. System nach Anspruch 7 oder 8,
**dadurch gekennzeichnet,**
**dass** mehrere Befestigungsvorrichtungen (12) und/oder mehrere Solar- und/oder Photovoltaikmodule (14) vorgesehen sind.

10. Verfahren zum Befestigen eines Solar- und/oder Photovoltaikmoduls (14) mit einer Befestigungsvorrichtung (12) nach einem der Ansprüche 1 bis 6 und/oder mit einem System nach einem der Ansprüche 7 bis 9, bei dem das längliche Rammprofil (10) in einen Boden (20) gerammt wird,
das Solar- und/oder Photovoltaikmodul (14) am Modulbefestigungsabschnitt (26) des Kantprofils (22) befestigt, vorzugsweise verschraubt, wird, und
das Kantprofil (22) am Rammprofil (10) befestigt, vorzugsweise verschraubt, wird.
